# EUROPÄISCHE PATENTSCHRIFT

(11) **EP 1 282 883 B1**
(45) Veröffentlichungstag und Bekanntmachung des Hinweises auf die Patenterteilung: **10.09.2003**
(21) Anmeldenummer: 01943064.4
(22) Anmeldetag: 11.05.2001
(51) Int. Cl.: G06K 15/00, G06F 3/12

(54) **VERFAHREN UND SYSTEM ZUR TRANSFORMATION DIGITALER DRUCKDATENSTRÖME SOWIE ZUGEHÖRIGE DRUCKER UND DRUCKERSERVER**
METHOD AND SYSTEM FOR THE TRANSFORMATION OF DIGITAL PRINT DATA STREAMS AND CORRESPONDING PRINTER AND PRINTER SERVER
PROCEDE ET SYSTEME DE TRANSFORMATION DE FLUX DE DONNEES D'IMPRESSION NUMERIQUES, IMPRIMANTE ET SERVEUR D'IMPRIMANTE CORRESPONDANTS

(30) Priorität: 17.05.2000 DE 10024177; 26.01.2001 DE 10103733
(43) Veröffentlichungstag der Anmeldung: 12.02.2003
(73) Patentinhaber: CCP Systems AG, 70435 Stuttgart (DE)
(72) Erfinder: KRAUTTER, Thomas, 70435 Stuttgart (DE)
(74) Vertreter: Springorum, Harald, Dr.
(86) Internationale Anmeldenummer: DE0101796
(87) Internationale Veröffentlichungsnummer: WO01088840

(56) Entgegenhaltungen:
- EP-A- 0 964 339
- EP-A- 1 061 456
- WO-A-00/17748
- GB-A- 2 357 348

## Beschreibung

Die vorliegende Erfindung betrifft ein Verfahren und System zur Transformation digitaler Druckdatenströme sowie zugehörige Drucker und Druckerserver.

Nahezu alle der heute üblichen Ausgabegeräte verwenden zur Erzeugung von gedruckten Dokumenten sogenannte Seitenbeschreibungssprachen, auch PDL (Page Description Language) genannt. Dabei steuert ein Anwendungsprogramm einen Treiber für das Ausgabegerät (etwa einen Druckertreiber) an. Dieser Treiber setzt dabei Informationen über die auszugebenden graphischen Objekte - wie etwa Text- oder Bildinformationen - in die jeweilige für den verwendeten Drucker passende PDL um, so daß dieser hiermit unmittelbar angesteuert werden kann.

Neuere Ausgabegeräte, wie etwa Laserdrucker oder digitale Farbdrucker bieten darüber hinaus die Möglichkeit, die zu ihrer Ansteuerung eingehenden Datenströme zwischenzuspeichern und etwa als Formularvorlage für weitere eingehende Druckdaten zu verwenden. Dies ermöglicht es, auf das jeweilige Drucken benötigter Formulare, wie etwa von Briefpapier, Rechnungsformularen oder Ähnlichem im Einzelfall zu verzichten. Vielmehr ruft die jeweils verwendete Anwendungssoftware nur noch das einmal im Drucker gespeicherte Formular ab und kombiniert es mit den aktuellen Druckdaten. Hierdurch kann das Datenaufkommen etwa in Netzwerken stark gesenkt werden. Es ergeben sich jedoch auch organisatorische Vorteile: Da die verwendeten Formulare nicht mehr von jedem einzelnen Benutzer auf seinem Rechner vorgehalten werden, kann hierdurch eine einheitliche Verwendung von Formularen erreicht werden, was zum einen das oftmals gewünschte einheitliche

Erscheinungsbild eines Unternehmens oder einer Institution sicherstellen hilft und zum anderen auch die Verwendung aktueller Formularversionen erleichtert.

Diese vorgenannten Vorteile werden jedoch zumeist nicht genutzt, da die in einem Unternehmen oder einer Institution verwendeten Drucker - hinsichtlich ihrer Ansteuerung - oft nicht einheitlich und somit die Nutzung der voranstehend beschriebenen Funktionen zu aufwendig ist, da die entsprechenden Formulare entweder für jedes verwendete Druckermodell zur Verfügung stehen müssen, was sehr arbeitsaufwendig wäre, oder aber für bestimmte Anwendungen nur bestimmte Drucker verwendet werden können, was sehr inflexibel ist.

Eine Möglichkeit zur Lösung dieses Problems besteht darin, die vorstehend beschriebene Inhomogenität der verwendeten Ausgabegeräte dadurch zu umgehen, daß man Verfahren zur Umwandlung verschiedener Datenstromformate zur Ansteuerung von Ausgabegeräten einsetzt, welche es all den Rechnern, die Druckdatenströme zur Ausgabe erzeugen, ermöglicht, hierzu ein einheitliches Format zu verwenden, indem jedem Drucker ein Interface-sei es als eigenes Gerät, sei es allein in Form eines Software-Filters - zugeordnet wird, das sich eines solchen Verfahrens bedient und auf der Seite des Eingangs-Datenstroms das einheitlich zu verwendende Format und auf Seiten des Ausgangs-Datenstroms das spezifische Format des anzusteuernden Druckers nutzt.

Eine solche Lösung beschreibt etwa die EP 0 109 615 B1, welche ein Verfahren zur Umwandlung von Text, der in Form digitaler Daten dargestellt ist, betrifft. Das durch diese Schrift gelehrte Verfahren weist jedoch im Hinblick auf die Möglichkeiten heutiger Systeme der Informationstechnologie erhebliche Nachteile auf: So ist das Verfahren nur für solche Eingangs-Druckdatenströme geeignet; die in ihrer Syntax einer Formatbeschreibungssprache folgen, deren Syntax sich mit Hilfe sogenannter regulärer Ausdrücke beschreiben läßt. Das in der EP 0 109 615 B1 gelehrte Verfahren bedient sich nämlich einer mittels sogenannter Schlüsselstatusvariablen realisierten Statusmaschine zur Erkennung und Umwandlung im Eingangs-Druckdatenstrom erkannter Eingabesteuerobjekte in Ausgabesteuerobjekte. Diese Ausgabesteuerobjekte werden dabei unmittelbar - nämlich nach einer festen Ordnung - in Abhängigkeit von dem die Schlüsselstatusvariablen repräsentierten jeweiligen Zustand aus den Eingabesteuerobjekten erzeugt. Eine solche Vorgehensweise entspricht der Funktionsweise des theoretischen Modells der Moore- bzw. Mealy-Maschinen, welche recht effizient arbeiten, aber nur die Erkennung regulärer Ausdrücke ermöglichen. Für die Gegebenheiten der Informationstechnik zum Prioritätszeitpunkt der EP 0 109 615 mag eine solche einfache Transformationsmöglichkeit ausreichend gewesen sein, da - wie auch schon dem dortigen Anspruch 1 zu entnehmen - nur Text - nebst Formatinformationen - umzuwandeln war.

Für die heutigen Gegebenheiten von PDL's oder auch anderen womöglich zu erkennenden Eingangsformaten, wie etwa HTML oder XML trifft dies jedoch keinesfalls mehr zu. Diese sind hinsichtlich ihrer Möglichkeiten inzwischen so komplex aufgebaut, daß zu ihrer Erkennung und Umwandlung eine Statusmaschine keinesfalls mehr ausreichend ist.

Aber auch das Zielformat, in das der Druckdatenstrom zu transformieren ist, stellt heute höhe Anforderungen an eine Transformation: Grundsätzlich bestünde hier zwar die Möglichkeit gleichsam das kleinste gemeinsame Vielfache der Funktionen heutiger Druckformate zu nutzen und so den Transformationsaufwand zu reduzieren. Diese Bequemlichkeit beim Entwurf des Transformationsprozesses wäre jedoch im Betrieb des Verfahrens teuer erkauft, da hierdurch das Datenaufkommen in Netzwerken wiederum erhöht würde, da auf leistungsfähige Druckeransteuerungsmöglichkeiten, die i.d.R. mit steigender Komplexität immer spezifischer im Hinblick auf den verwendeten Druckertyp werden, zwangsläufig verzichtet werden müßte. Ein solches erhöhtes Datenaufkommen stünde jedoch dem Ziel, den Datenverkehr im Netzwerk durch die Verwendung von PDL's zu reduzieren, wiederum entgegen. Somit ist es gleichfalls eine Forderung an den Transformationsprozeß, daß dieser die Voraussetzungen dafür herstellt, daß die Ziel-Formate in möglichst flexibler Weise mit all ihren zur Verfügung stehenden Druckfunktionen erzeugt werden können, damit so der Verkehr auf den Datenübertragungsleitungen minimiert werden kann.

Im weiteren ist anzuführen, daß Drucksysteme auch heute noch nur einen einzigen Zweck erfüllen: nämlich drucken. Alle Hersteller von Laserdruckern und digitalen Kopiersystemen haben in den letzten Jahren große Anstrengungen unternommen, um die Prozessorleistungen, Speicherkapazitäten und zusätzliche Optionen (wie z.B. Speicherkarten, Festplatten, Netzwerkkarten) dieser Systeme den gewachsenen Anforderungen anzupassen. Die Art und Weise, wie Drucker und Kopierer gesteuert und programmiert werden, hat sich jedoch in den letzten zehn Jahren nicht wesentlich geändert.

Die Drucksysteme werden nach wie vor von einer Seitenbeschreibungssprache (PDL-Page Description Language) wie z.B. PCL, Postscript oder Prescribe gesteuert. Sie erlaubt es, ein Dokument und seine Bestandteile hinlänglich zu beschreiben. Die inzwischen jedoch vorhandenen vielfältigen zusätzlichen Optionen moderner Druck- und Kopiersysteme können nicht genutzt werden. Die Konsequenz daraus ist, dass auch heute noch der gesamte Druckprozess von einem Host-Computer gesteuert und kontrolliert wird. Seine Aufgabe besteht im wesentlichen darin, die jeweilige Information exakt in die vom Drucksystem "verstandene" Seitenbeschreibungssprache umzuwandeln.

Es ist somit Aufgabe der vorliegenden Erfindung ein Verfahren zur Transformation digitaler Druckdatenströme anzugeben, welches sowohl in der Lage ist komplexere Seitenbeschreibungssprachen zu erkennen, deren Syntax sich nicht mehr mit Hilfe einfacher regulärer Ausdrücke beschreiben läßt, als auch die Voraussetzungen dafür schafft, daß die erkannten graphischen Objekte möglichst flexibel und effektiv, d.h. hinsichtlich ihrer Beschreibung auf möglichst hoher Abstraktionsebene, in ein Zielformat transformiert aber auch weiterverarbeitet werden können.

Diese Aufgabe wird erfindungsgemäß durch ein Verfahren zur Transformation digitaler Druckdatenströme gelöst, bei dem ein Eingangs-Druckdatenstrom eingelesen, dieser mittels eines Parsers auf graphisch darstellbare Objekte hin analysiert und in diese graphisch darstellbaren Objekte zerlegt wird, sowie die graphisch darstellbaren Objekte in einem Speicher in einem objektorientierten Format hinterlegt werden und die im Speicher in einem objektorientierten Format hinterlegten graphisch darstellbaren Objekte in ein Format zur Ansteuerung eines Ausgabegerätes, vorzugsweise eines Druckers, transformiert und die so transformierten Objekte zu einem Ausgangs-Druckdatenstrom zusammengefaßt und ausgegeben werden und das erfindungsgemäß dadurch gekennzeichnet ist, daß graphisch darstellbare Objekte im Speicher in einem objektorientierten Format hinterlegt werden, denen für die Ansteuerung des Ausgabegerätes mindestens ein hinterlegtes Script zugeordnet ist, das in den im Script definierten Fällen ausgeführt wird, um die zugeordneten Objekte auszugeben.

Die Analyse und Zerlegung des Eingangs-Druckdatenstromes durch einen Parser (Syntaxanalysator) gewährleistet dabei im Gegensatz zur Verwendung einer Statusmaschine, daß die Syntax der Seitenbeschreibungssprache nicht mehr auf die Verwendung regulärer Ausdrükke beschränkt ist und so auch leistungsfähige Seitenbeschreibungssprachen verwendet werden können. Vielmehr entspricht ein solcher Parser in seiner theoretischen Leistungsfähigkeit einer Turing-Maschine und stellt damit die theoretisch maximal erreichbare Leistungsfähigkeit zur Analyse und Zerlegung formaler Sprachen sicher.

Weiterhin wird durch die Hinterlegung der graphisch darstellbaren Objekte - und damit natürlich auch der Scripten, die selbst ja auch graphisch darstellbare Objekte sind - in einem Speicher in einem objektorientierten Format erreicht, daß die durch den Parser erkannten Objekte nun in diesem für die Weiterverarbeitung äußerst günstigen Zwischenformat zur Verfügung stehen.

Die Objekte werden hier vorzugsweise mittels eines sogenannten Display List Management verwaltet, welches ein- und mehrseitige Dokumente in beliebig vielen Ebenen unterstützt und welches dynamisch um neue Objekte erweitert werden kann. Die einzelnen graphischen Objekte werden anhand ihrer Zugehörigkeit zu bestimmten - zweckmäßigerweise geeignet hierarchisch organisierten - Klassen wie etwa zur Klasse der Punkte, Ellipsen, Kreise, Linien, Polygone, Rechtecke, Quadrate aber auch zu der komplexerer Objekttypen wie z.B. Barcodes, komplexer Texte oder frei definierbarer Elemente wie Farbverläufe oder Schriftarten abgelegt, was ihre effektive Umwandlung in einen Ausgangs-Druckdatenstrom ermöglicht, da es durch die Klasse des jeweiligen Objektes bereits implizit Informationen über seine Transformationsmöglichkeiten in das Format des Ausgangs-Druckdatenstroms vorliegen. So ist etwa über ein Objekt vom Typ Quadrat durch die Objekthierarchie schon bekannt, da es sich hier um eine Unterklasse der Rechtecke handelt. Stellt nun das Zielformat, für das ein Ausgangs-Druckdatenstrom erzeugt werden soll, Sprachkonstrukte zur Beschreibung von Rechtecken in der Seitenbeschreibungssprache zur Verfügung, so ist allein schon aufgrund der Position des Quadrates in der Objektklassenhierarchie klar, daß es sich hier auch um ein Rechteck - wenn auch mit besonderen Eigenschaften - handelt und insofern die Möglichkeiten des Zielformates hinsichtlich von Rechtecken auch für ein Objekt der Klasse Quadrat genutzt werden können.

Neben solchen - aus der Objektklassenhierarchie ableitbaren - impliziten Informationen über die einzelnen Objekte ist es aber auch möglich, den Objekten explizit Informationen über ihre Umwandlungsmöglichkeiten in bestimmte Zielformate beizugeben, wobei dies vorteilhafterweise auch mit den vorstehend beschriebenen implizit gegebenen Informationen kombiniert werden kann, indem etwa einer in der Objektklassenhierarchie höher angeordneten Klasse eine Umwandlungsmethode in ein bestimmtes Zielformat beigegeben wird, die dann im Wege der Vererbung automatisch auch den Objekten untergeordneter niederrangigerer Klassen zur Verfügung steht, sofern diesen nicht schon eine bessere spezifischere Methode zugeordnet ist.

In einer Ausführungsform des erfindungsgemäßen Verfahrens werden die graphisch darstellbaren Objekte vor ihrer Hinterlegung im Speicher zu Über-Objekten höherer Komplexität zusammengefaßt werden.

Die so erhaltenen Über-Objekte werden dann im objektorientierten Format im Speicher hinterlegt. Auf diese Weise können weniger komplexe graphische Objekte zu komplexeren graphischen Über-Objekten zusammengefaßt werden. So können etwa Folgen von jeweils aneinander stoßenden Linien, die als graphische Objekte im Eingangs-Druckdatenstrom erkannt wurden zu einem graphischen Polygon-Über-Objekt zusammengefaßt werden.

Eine solche Zusammenfassung bietet verschiedene Vorteile, wie etwa die leichtere Handhabarkeit des im Ganzen hinterlegten Über-Objektes im Vergleich zu den einzelnen Objekten, da dieses dann einheitlich mit Wirkung für alle in ihm zusammengefaßten Teil-Objekte mit den Methoden für die Über-Objekt-Klasse behandelt werden kann. Auch hilft es u.U. den Datenverkehr auf den verwendeten Übertragungsleitungen weiter zu minimieren, da ein einmal zusammengefaßtes Objekt später im Ausgangs-Druckdatenstrom - sofern dort technisch unterstützt - auch zusammengefaßt weitergeleitet wird, was i.d.R. ein geringeres zu übertragendes Datenvolumen erfordert, als die Übertragung der einzelnen Objekte.

Eine bevorzugte Ausführungsform des Verfahrens nach der vorliegenden Erfindung ist dadurch gekennzeichnet, daß zur Analyse auf und Zerlegung in die graphisch darstellbaren Objekte ein Parser verwendet wird, der im theoretischen Modell einem Push-Down-Automaten entspricht und der damit Sprachen mit sogenannten kontextfreien Grammatiken besonders effektiv zu analysieren und zu zerlegen in der Lage ist.

Eine weitere Ausführungsform des Verfahrens nach der vorliegenden Erfindung ist dadurch gekennzeichnet, daß auf den ausgegebenen Ausgangs-Druckdatenstrom hin eingehende Rückmeldungen eingelesen und auf Fehlernachrichten hin analysiert werden, die anzeigen, daß das Ausgabegerät, vorzugsweise der Drucker, ein transformiertes graphisches Objekt im Ausgangs-Druckdatenstrom erkannt hat, welches von ihm nicht ausgegeben werden kann, sodann dieses graphische Objekt in Teilobjekte geringerer Komplexität zerlegt wird, und die so erhaltenen Teilobjekte im Format zur Ansteuerung des Ausgabegerätes in den Ausgangs-Druckdatenstrom, welcher zum Ausgabegerät ausgegeben wird, eingeschleust werden.

Auf diese Weise kann gleichsam getestet werden, ob das angesteuerte Ausgabegerät etwa in der Lage ist ein, Barcode-Objekt unmittelbar zu erkennen und auszugeben oder nicht. Ist es hierzu nicht in der Lage und meldet es dies rück, so wird der Barcode einfach in Objekte nächst niederer Hierarchie, etwa gefüllte Rechtecke zerlegt und mit diesen Objekten wiederum probiert. Dies wird solange fortgesetzt - notfalls bis zur Zerlegung der graphischen Objekte in einzelne Punkte - bis der Ausgabeversuch erfolgreich ist. Auch für dieses Vorgehen erweist sich die für das Zwischenformat gewählte objektorientierte Datenstruktur mit ihrer Objekthierarchie als besonders geeignet. Vorzugsweise wird sich für die weitere Durchführung des Verfahrens gemerkt, auf welcher Ebene jeweils der Objektklassen der Zerlegungsprozeß für ein bestimmtes Ausgabegerät erfolgreich war, um im nächsten Versuch dann bereits auf dieser Ebene den Ausgabeprozeß zu beginnen, um auch so unnötige Datenübertragungen zu vermeiden, gleichwohl aber den maximalen Abstraktionsgrad des Ausgabegerätes zu nutzen. Hierdurch wird das zu übertragende Datenvolumen auch bei hoher Flexibilität auf das notwendige Maß reduziert.

In einer Ausführungsform des Verfahren nach der vorliegenden Erfindung ist mindestens einem, im objektorientierten Format im Speicher hinterlegten graphisch darstellbaren Objekt, mindestens ein Script zugeordnet, das externe Geräte, vorzugsweise Archivierungsvorrichtunge, Falzsysteme, Kuvertiersysteme oder Sicherheitseinrichtungen ansteuert, was eine Einbindung aller im weitesten Sinne zur Dokumentenverarbeitung erforderlichen Geräte ermöglicht.

Eine weitere bevorzugte Ausführunsgform des erfindungsgemäßen Verfahrens ist dadurch gekennzeichnet, daß mindestens einem, im objektorientierten Format im Speicher hinterlegten graphisch darstellbaren Objekt, mindestens ein Script zugeordnet ist, das selbsttätig Daten, vorzugsweise objektorientiert organisierte Daten, Bilddaten, Textdaten oder Daten aus Web-Seiten des Internet, Daten aus XML-Dokumenten oder auch e-mails, empfängt.

Vorzugsweise kann das selbsttätig Daten empfangende Script diese Daten auch selbsttätig anfordern.

Ebenso ist es möglich, daß ein Script auch selbsttätig Daten, vorzugsweise objektorientiert organisierte Daten, Bilddaten, Textdaten oder Daten aus Web-Seiten des Internet, Daten aus XML-Dokumenten oder auch e-mails, sendet, wobei es insbesondere auch das ihm selbst zugeordnete graphische Objekt an einen Empfänger senden kann.

Auch kann es die von ihm empfangenen Daten wiederum dem ihm zugeordneten graphischen Objekt rück-zuordnen und das ihm selbst zugeordnete graphische Objekt mit den von ihm selbst rück-zugeordneten angeforderten und empfangenen Daten an einen Empfänger weitersenden oder auch ausdrucken.

Zu den vorstehenden Erläuterungen sei bemerkt, daß die Ausführungsformen des erfindungsgemäßen Verfahrens, die anderen Objekten selbst Objekte zur Verfügung stellen etwa durch Weitersendung oder auch durch Bereithaltung zum Empfang oder zur Abfrage durch etwa ein Script auch unter den Begriff "Dynamic Object Linking" (DOL) gefaßt werden.

Nach dem erfindungsgemäßen Verfahren arbeitende Systeme, wie etwa Drucksysteme sind in der Lage e-mails zu versenden und zu empfangen sowie originäre Druck- und Bilddaten ohne Druckertreiber zu drucken. Sie können beliebige Informationen auf Festplatten oder Speicherkarten abspeichern und diese allen im Netzwerk und Internet angeschlossenen Geräten verfügbar machen. Mit anderen Worten sie übernehmen selbständig anspruchsvolle Aufgaben der Informationsverarbeitung und -bereitstellung, um Host-Computer sowie Personalcomputer von etlichen administrativen Aufgaben entlasten. In einer heterogenen Netzwerk- und Druckumgebung mit Laserdruck- und Kopiersystemen unterschiedlicher Hersteller in Kombination mit Impact-Druckern sowie Spezialdrucksystemen erlauben sie es darüber hinaus, alle angeschlossenen Drucksysteme mit Hilfe einer einzigen standardisierten Programmiersprache, nämlich der Sript-Sprache zu administrieren und reduzieren somit den Verwaltungsaufwand auf ein Minimum. An dieser Stelle sei erwähnt, daß diese nach dem erfindungsgemäßen Verfahren arbeitende Systeme auch als JScribe (eingetragene Marke) - Systeme bezeichnet werden und das erfindungsgemäße Verfahren demgemäß auch als JScribe (eingetragene Marke) bezeichnet wird.

Entwickler und Systemhäuser werden bei Verwendung von JScribe (eingetragene Marke) deshalb in der Lage sein, Objekte und Funktionen zu schaffen, die im Drucksystem resisdent hinterlegt sind und gewünschte individuelle Arbeitsabläufe ermöglichen bzw. steuern. Diese Objekte und Funktionen können jede durch die JScribe (eingetragene Marke)-Basistechnologie bereitgestellte Funktionalität nutzen, inkl. anspruchvollster Kommandos für die Job- oder Seitenverarbeitung und für die komplette Steuerung der Druckdaten und Emulationen. Vorzugsweise ermöglicht das erfindungsgemäße Verfahren außerdem den Zugang zu internen Druckerfunktionen und Statusinformationen (Seitenzählwerk, Netzwerkkomponenten, File-System u.a.) etwa via Script.

Vorzugsweise ist das erfindungsgemäße Verfahren dadurch gekennzeichnet, daß graphisch darstellbare Objekte im Speicher in einem objektorientierten Format hinterlegt werden, denen mindestens ein hinterlegtes Script zugeordnet ist, das in dem, im Script definierten Fall der Ausgabe des Objekts, ausgeführt wird. Hierdurch ist es etwa möglich solche Scripts, z.B. Visual-Basic-Scripts, Java-Scripts oder auch sogenannten Stream-Code ereignisorientiert, z.B. im Falle des Ausdrucks eines Formular-Objects, also gleichsam 'ON-PRINT' auszuführen, wodurch etwa solche Funktionen wie den Ausdruck von Kopien des gleichen Formulars mit den gleichen Nettodaten, aber auf verschiedenem Papier aus diversen Schächten auszuführen. Insbesondere im Zusammenwirken mit solchen Ausführungsformen des erfindungsgemäßen Verfahrens, die externe Geräte, wie Falz- oder Kuvertiermaschinen oder auch Heftmaschinen ansteuern, ist dies besonders vorteilhaft.

Es kann aber auch so sein, daß im jeweiligen Script mindestens ein Fall zur Ausführung des Scripts definiert ist, der selbsttätig, vorzugsweise ohne weiteren Einfluß von außen, eintritt.

So kann etwa der in dem im jeweiligen Script mindestens definierte selbsttätig eintretende Fall zur Ausführung des Scripts als Timer, d.h. als durch Zeitablauf selbsttätig eintretender Fall, ausgestaltet sein, wobei dieser Timer vorzugsweise zyklisch arbeitet, d.h. sich selbst bei Ablauf wieder startet.

Selbsttätige Scripts können so von sich aus aktiv werden und etwa die Tageszeitung, womöglich eine aus unterschiedlichen Quellen selbst zusammengestellte, aus dem Internet laden, die gefundenen, geladenen und analysierten Informationen einem hinterlegten Objekt zuordnen und dieses Objekt dann drucken, völlig ohne Beteiligung eines PC's oder sonstigen Host-Rechners an den der Drucker angeschlossen wäre.

So kann der einfache Download von JScribe(eingetragene Marke)-Sequenzen (Scripts mit entsprechenden zugeordneten Objekten) den Drucker beispielsweise dazu veranlassen, selbstständig Informationen über aktuelle Aktienkurse einzuholen, zu formatieren und auszudrucken. Bildinformationen, Textdokumente, WEB-Seiten, XML-Dokumente und andere beliebige Druckdaten können unter Verzicht auf jegliche Aufbereitung durch den PC (z.B. durch Druckertreiber) analysiert, gegebenenfalls modifiziert, und in optimaler Qualität ausgedruckt werden. Da JScribe (eingetragene Marke) zeitgleich auch als Server-Version für Rechnersysteme einsetzbar ist, werden Drucksysteme erstmals in die Lage versetzt, während des Druckvorgangs interaktiv auf Datenbestände von Host-Systemen (z.B. SQL-Datenbanken) zuzugreifen.

Als Sprache für die Scripts nach der vorliegenden Erfindung findet vorzugsweise Java-Script Verwendung. JavaScript, als weltweit etablierter Standard für die scriptgesteuerte, intelligente Programmierung von Webseiten hat im Internet eine Lawine von innovativen und funktionellen Lösungen ausgelöst, die entscheidend dazu beigetragen haben, das Zeitalter von eBusiness und eCommerce einzuläuten. Diese intelligente Technologie, die so entscheidend die weltweite, rasante Entwicklung des Internets geprägt hat, ist damit nun erstmals auch für Drucksysteme verfügbar und bildet hier vorzugsweise die Basistechnologie für Script-Anwendungen im Bereich der vorliegenden Erfindung, mithin des Druck- und Dokumenten-Managements, die wohl einzigartig und im Vergleich zu etablierten Lösungen erheblich kostengünstiger ist.

Mit JScribe in Verbindung mit Java-Script wird damit eine innovative Technologie zur Verfügung gestellt, die es erlaubt, jedes entsprechende nach dem erfindungsgemäßen Verfahren betriebene Drucksystem ebenso einfach zu programmieren, wie eine Internet-Homepage. Die bereits beschriebenen Kommunikationsmöglichkeiten ermöglichen zusammen mit dem konsequent modularen objektorientierten Aufbau von JScribe und den dies idealerweise unterstützenden, Java-Script-typischen Erweiterungsmöglichkeiten, innerhalb kürzester Zeit den Aufbau komplexer Output-Management Systeme für die verschiedensten Anwendungsbereiche.

Eine weitere bevorzugte Ausführungsform des Verfahrens nach der vorliegenden Erfindung ist dadurch gekennzeichnet, daß die im Speicher in einem objektorientierten Format hinterlegten graphisch darstellbaren Objekte, vorzugsweise auch Script-Objekte (etwa Java-Script-Objekte), vorzugsweise vor ihrer Ausgabe im Ausgangs-Druckdatenstrom, über ein Applikationsinterface zum Auslesen, zur Veränderung, zur Löschung oder für das Hinzufügen neuer Objekte bereitgehalten werden.

Nach dem Stand der Technik müssen bislang die für die Hinterlegung von Formularen in den Ausgabegeräten notwendigen Seitenbeschreibungen mühsam von Hand erstellt, d.h. in der jeweiligen Seitenbeschreibungssprache programmiert werden - eine zeitraubende und teure Arbeit, die nur von wenigen hierfür qualifizierten Programmierern durchgeführt werden kann. Gleiches gilt auch für Änderungen an den abgelegten Daten.

Das objektorientierte Zwischenformat ermöglicht es nun, die hinterlegten graphisch darstellbaren Objekte auf technisch elegante Art und Weise über ein Applikationsinterface zum Auslesen, zur Veränderung, zur Löschung oder für das Hinzufügen neuer Objekte bereitzuhalten, indem es die hierzu erforderlichen Methoden den jeweiligen Objekten entsprechend ihrer Klassenhierarchie zuordnet. Dies bedeutet, daß die im Speicher abgelegten Objekte etwa auf einem Bildschirm angezeigt und beliebig modifiziert werden können. Auch ist hier das Löschen von vorhandenen, wie auch das Hinzufügen neuer Objekte möglich.

Durch die Anbindung geeigneter Anwendungssoftware - auch als FormMaker bezeichnet wird es so jedem EDV-Anwender insbesondere möglich, ganz ohne Programmierkenntnisse bestehende Formulare zu modifizieren und neue Formulare zu erstellen, was für Scripts ebenso gilt.

Bei geeigneter Wahl des Applikationsinterface und entsprechend in ausreichendem Umfang zur Verfügung stehender Bearbeitungsmethoden für die verwendeten Objektklassen wird so ein graphisches Kernsystem mit Funktionsschnittstelle zur Verfügung gestellt, die von Anwendungen für graphische Benutzeroberflächen, wie etwa von solchen die auf dem Betriebssystem Windows basieren, dazu genutzt werden kann, die Objektdaten als einheitliches Dokument am Bildschirm darzustellen und mit unterschiedlichen Bearbeitungswerkzeugen zu modifizieren.

Vorzugsweise erlaubt das Applikationsinterface es überdies auch Script Objekte, vorzugsweise Java-Script-Objekte selbst, graphisch auszulesen, zu verändern, zu löschen oder hinzuzufügen, wobei diese graphisch vorgenommenen Manipulationen soweit erforderlich automatisch in Script-Objekte, vorzugsweise Java Script-Objekte transformiert werden. Es bietet somit eine vollständige grafische Entwicklungsumgebung für Rechner, vorzugsweise unter dem Betriebssystem Windows arbeitende Rechner, die die Programmierung der Druck- und Kopiersysteme ohne Java-Script-Kenntnisse gestattet.

Auch können bereits existente Entwicklungstools, die auf Java basieren ebenfalls für die Entwicklung individueller JScribe(eingetragene Marke) -Anwendungen genützt werden.

Die Verwendung einer sogenannten FormMaker Anwendungssoftware gestattet das Design "intelligenter" elektronischer Formulare, die mit Hilfe von JScribe (eingetragene Marke) in logische Dokumente transformiert werden. Diese wiederum können in im Netzwerk angeschlössenen Systemen zur Verfügung gestellt und an jedem gewünschten Ort von beliebigen Drucksystemen, vorzugsweise Laserdrucksystemen und digitalen Kopiersystemen ausgegeben, als Email versendet oder auch an Archivierungssysteme übergeben werden.

Die vorliegenden erfindungsgemäßen Verfahren können auch auf einem System zur Transformation digitaler Druckdatenströme mit mindestens einer Datenverarbeitungseinheit mit mindestens einem Speicher und mindestens einer Kommunikationsschnittstelle implementiert vorliegen, wobei die Datenverarbeitungseinheit programmtechnisch so eingerichtet ist, daß sie nach einer Ausführunsgform des erfindungsgemäßen Verfahrens arbeitet.

Dabei weist das System vorzugsweise auch eine Bedienstation mit Anzeigemittel und Eingabemittel auf, welche es ermöglicht die im Speicher der Datenverarbeitungseinheit in einem objektorientierten Format hinterlegten graphisch darstellbaren Objekte, vorzugsweise auch Script-Objekte, vorzugsweise vor ihrer Ausgabe im Ausgangs-Druckdatenstrom, über das Applikationsinterface auszulesen, zu verändern, zu löschen oder hinzuzufügen.

Auch kann es das erfindungsgemäße System überdies erlauben jeweilig hinterlegte Objekte, vorzugsweise auch Script-Objekte selbst, wie etwa Java-Script-Objekte, graphisch auszulesen, zu verändern, zu löschen oder hinzuzufügen, wobei diese graphisch vorgenommenen Manipulationen soweit erforderlich automatisch in Java-Script-Objekte transformiert werden.

Auch kann das erfindungsgemäße System in einen Drucker oder auch einen Drucker-Server integriert sein.

JScribe (eingetragene Marke) ist damit nicht nur unmittelbar auf Druckern .und digitalen Kopiersystemen einsetzbar, sondern kann auch auf PC-Serverplattformen implementiert werden.

Zu Installationszwecken auf Drucksystemen können die JScribe-Scriptsequenzen etwa in einen Prescribe(eingetragene Marke)-Datenstrom eingebunden werden. Das diese Daten empfangende Drucksystem, etwa der entsprechende Laserdrucker oder digitale Kopierer wird den Programmcode einlesen und kompilieren.

Das ermöglicht die Konfiguration von Netzwerken mit kleinen, aber mit hoher Funktionalität ausgestatteten Hardwareeinheiten, die über eine gemeinsame Schnittstelle verfügen und den Zugang zur Archivierung von Dokumenten, zum verteilten Drucken (Clusterprinting) und Sicherheitsdruck sowie vielem mehr ermöglichen

Die vorstehend beschriebenen Auführungsformen des Verfahrens nach der vorliegenden Erfindung können selbstverständlich jeweils auch als. Computerprogrammprodukt realisiert sein, welches ein computerlesbares Medium mit Computerprogramm-Code-Mitteln aufweist oder als ein Computerprogramm auf einem elektronischen Trägersignal und bei dem jeweils nach Laden des Computerprogramms der Computer durch das Programm zur Durchführung der hier beschriebenen erfindungsgemäßen Verfahren veranlaßt wird.

Im folgenden wird ein nicht einschränkend zu verstehendes Ausführungsbeispiel anhand der Zeichnung besprochen. In dieser zeigt:

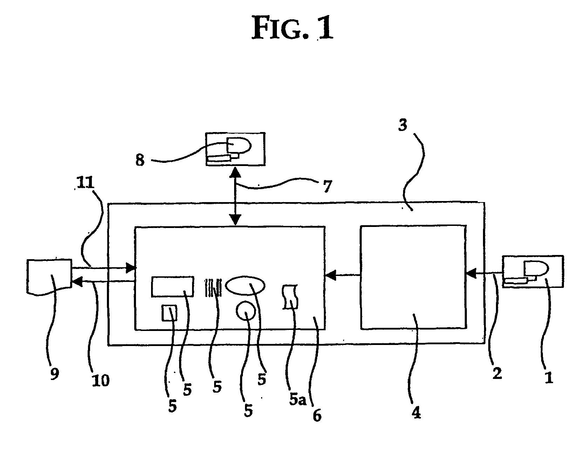

- Fig. **1**: den Ablauf einer Ausführungsform des erfindungsgemäßen Verfahrens anhand einer schematischen Darstellung.

Fig. **1** zeigt den Ablauf einer Ausführungsform des erfindungsgemäßen Verfahrens anhand einer schematischen Darstellung. Von einem Rechner **1** wird ein Eingangs-Druckdatenstrom **2** an eine Vorrichtung **3** - etwa einen Rechner, wie ein PC oder auch ein intelligentes Ausgabegerät, wie z.B. ein intelligenter Drucker - gesendet, die nach dem Verfahren nach der vorliegenden Erfindung arbeitet. Dort wird der Eingangs-Druckdatenstrom **2** von einem Parser **4** analysiert und zerlegt. Die als Produkt dieser Zerlegung erkannten graphischen Objekte **5**, **5a** werden in einem Speicher **6** in einem objektorientierten Format hinterlegt; dies nach dem sie gegebenenfalls zu Über-Objekten zusammengefaßt wurden. Die im Speicher **6** hinterlegten Öbjekte**5**, vorzugsweise Script-Objekte **5a**, werden über ein Applikationsinterface **7** zum Auslesen, zur Veränderung, zur Löschung oder für das Hinzufügen neuer Objekte bereitgehalten. Hierdurch können die im Speicher **6** abgelegten Objekte **5**, **5a** etwa auf einem Bildschirm **8** angezeigt und beliebig modifiziert werden. Auch ist hier das Löschen von vorhandenen, wie auch das Hinzufügen neuer Objekte möglich. Bei Verwendung geeigneter Anwendungssoftware wird es so jedem Benutzer möglich, bestehende Formulare leicht und ohne Programmierkenntnisse zu modifizieren oder neue Formulare zu erstellen. Die im Speicher **6** in einem objektorientierten Format hinterlegten graphisch darstellbaren Objekte **5**, **5a** werden zur Ausgabe in ein Format zur Ansteuerung eines Ausgabegerätes, vorzugsweise eines Druckers **9**, transformiert und die so transformierten Objekte **5**, **5a** zu einem Ausgangs-Druckdatenstrom **10** zusammengefaßt und ausgegeben. Auf den ausgegebenen- Ausgangs-Druckdatenstrom **10** hin eingehende Rückmeldungen **11** werden eingelesen und auf Fehlernachrichten hin analysiert, die anzeigen, daß der Drucker **10** ein graphisches Objekt **5**, **5a** im Ausgangs-Druckdatenstrom **10** erkannt hat, welches von ihm nicht ausgegeben oder verarbeitet werden kann. Sodann wird dieses graphische Objekt **5**, **5a** in Teilobjekte geringerer Komplexität zerlegt, und die so erhaltenen Teilobjekte im Format zur Ansteuerung des Druckers **9** in den Ausgangs-Druckdatenstrom **10**, welcher zum Drucker **9** hin ausgegeben wird, eingeschleust.

## Patentansprüche

1. Verfahren zur Transformation digitaler Druckdatenströme, bei dem
(i) ein Eingangs-Druckdatenstrom (**2**) eingelesen,
(ii) dieser mittels eines Parsers (**4**) auf graphisch darstellbare Objekte (**5**) hin analysiert und in diese graphisch darstellbaren Objekte (**5**) zerlegt wird, sowie
(iii) die graphisch darstellbaren Objekte (**5**) in einem Speicher (**6**) in einem objektorientierten Format hinterlegt werden, und
(iv) die im Speicher (**6**) in einem objektorientierten Format hinterlegten graphisch darstellbaren Objekte (**5**) in ein Format zur Ansteuerung eines Ausgabegerätes (**9**), vorzugsweise eines Druckers, transformiert und
(v) die so transformierten Objekte zu einem Ausgangs-Druckdatenstrom (**10**) zusammengefaßt und ausgegeben werden,
**dadurch gekennzeichnet, daß** graphisch darstellbare Objekte (**5**, **5a**) im Speicher (**6**) in einem objektorientierten Format hinterlegt werden, denen für die Ansteuerung das Ausgabegerätes mindestens ein hinterlegtes Script zugeordnet ist, das in den im Script definierten Fällen, ausgeführt wird, um die zugeordneten Objekte auszugeben.

2. Verfahren nach Anspruch 1, **dadurch gekennzeichnet, daß** die graphisch darstellbaren Objekte (**5**, **5a**) vor ihrer Hinterlegung im Speicher (**6**) zu Über-Objekten höherer Komplexität zusammengefaßt werden.

3. Verfahren nach Anspruch 1 oder 2, **dadurch gekennzeichnet, daß**
auf den ausgegebenen Ausgangs-Druckdatenstrom (**10**) hin eingehende Rückmeldungen (**11**) eingelesen und auf Fehlernachrichten hin analysiert werden, die anzeigen, daß das Ausgabegerät (**9**), vorzugsweise der Drucker, ein transformiertes graphisches Objekt im Ausgangs-Druckdatenstrom (**10**) erkannt hat, welches von ihm nicht ausgegeben werden kann,
sodann dieses graphische Objekt in Teilobjekte geringerer Komplexität zerlegt wird, und
die so erhaltenen Teilobjekte im Format zur Ansteuerung des Ausgabegerätes (**9**) in den Ausgangs-Druckdatenstrom (**10**), welcher zum Ausgabegerät (**9**) ausgegeben wird, eingeschleust werden.

4. Verfahren nach Anspruch 1, 2 oder 3, **dadurch gekennzeichnet, daß** mindestens einem, im objektorientierten Format im Speicher (**6**) hinterlegten graphisch darstellbaren Objekt (**5**), mindestens ein Script (**5a**) zugeordnet ist, das externe Geräte, vorzugsweise Archivierungsvorrichtunge, Falzsysteme, Kuvertiersysteme oder Sicherheitseinrichtungen ansteuert.

5. Verfahren nach Anspruch 1, 2, 3 oder 4, **dadurch gekennzeichnet, daß** mindestens einem, im objektorientierten Format im Speicher (**6**) hinterlegten graphisch darstellbaren Objekt (**5**), mindestens ein Script (**5a**) zugeordnet ist, das selbsttätig Daten, vorzugsweise objektorientiert organisierte Daten, Bilddaten, Textdaten oder Daten aus Web-Seiten des Internet, Daten aus XML-Dokumenten oder auch e-mails, empfängt.

6. Verfahren nach Anspruch 5, **dadurch gekennzeichnet, daß** das selbsttätig Daten empfangende Script (**5a**) diese Daten auch selbsttätig anfordert.

7. Verfahren nach einem der Ansprüche 1 bis 6, **dadurch gekennzeichnet, daß** mindestens einem, im objektorientierten Format im Speicher (**6**) hinterlegten graphisch darstellbaren Objekt (**5**), mindestens ein Script (**5a**) zugeordnet ist, das selbsttätig Daten, vorzugsweise objektorientiert organisierte Daten, Bilddaten, Textdaten oder. Daten aus Web-Seiten des Internet, Daten aus XML-Dokumenten oder auch e-mails, sendet.

8. Verfahren nach Anspruch 7, **dadurch gekennzeichnet, daß** das Script (**5a**) das ihm selbst zugeordnete graphische Objekt (**5**) an einen Empfänger sendet.

9. Verfahren nach Anspruch 8 soweit dieser auf Anspruch 5 oder 6 rückbezogen ist, **dadurch gekennzeichnet, daß** das Script (**5a**) die von ihm empfangenen Daten wiederum dem ihm zugeordneten graphischen Objekt (**5**) rück-zuordnet und das ihm selbst zugeordnete graphische Objekt (**5**) mit den von ihm selbst rück-zugeordneten angeforderten und empfangenen Daten an einen Empfänger weitersendet.

10. Verfahren nach Anspruch 5 oder 6, **dadurch gekennzeichnet, daß** das Script (**5a**) die von ihm empfangenen Daten wiederum dem ihm zugeordneten graphischen Objekt (**5**) rück-zuordnet und das ihm selbst zugeordnete graphische Objekt (**5**) mit den diesem von ihm selbst rück-zugeordneten angeforderten und empfangenen Daten ausdruckt.

11. Verfahren nach einem der Ansprüche 1 bis 10, **dadurch gekennzeichnet, daß** mindestens einem, im objektorientierten Format im Speicher (**6**) hinterlegten graphisch dar-. stellbaren Objekt (**5**), mindestens ein Script (**5a**) zugeordnet ist, das. in dem, im Script (**5a**) definierten Fall der Ausgabe des Objekts (**5**), ausgeführt wird.

12. Verfahren nach einem der Ansprüche 1 bis 11, **dadurch gekennzeichnet, daß** mindestens einem, im objektorientierten Format im Speicher (**6**) hinterlegten graphisch darstellbaren Objekt (**5**), mindestens ein Script (**5a**) zugeordnet ist, wobei in dem jeweiligen Script (**5a**) mindestens ein Fall zur Ausführung des Scripts (**5a**) definiert ist, der selbsttätig, vorzugsweise ohne weiteren Einfluß von außen, eintritt.

13. Verfahren nach Anspruch 12, **dadurch gekennzeichnet, daß** der in dem im jeweiligen Script (**5a**) mindestens definierte selbsttätig eintretende Fall zur Ausführung des Scripts (**5a**) als Timer, d.h. als durch Zeitablauf selbsttätig eintretender Fall, ausgestaltet ist.

14. Verfahren nach Anspruch 13, **dadurch gekennzeichnet, daß** der Timer zyklisch arbeitet, d.h. sich selbst bei Ablauf wieder startet.

15. Verfahren nach einem der Anspüche 1 bis 14, **dadurch gekennzeichnet, daß** für die Scripts als formale Sprache Java-Script verwendet wird.

16. Verfahren nach einem der Anspüche 1 bis 15, **dadurch gekennzeichnet, daß** die im Speicher (**6**) in einem objektorientierten Format hinterlegten graphisch darstellbaren Objekte (**5**), vorzugsweise auch Script-Objekte (**5a**), vorzugsweise vor ihrer Ausgabe im Ausgangs-Druckdatenstrom (**10**), über ein Applikationsinterface (**7**) zum Auslesen, zur Veränderung, zur Löschung oder für das Hinzufügen neuer Objekte (**5**) bereitgehalten werden.

17. System zur Transformation digitaler Druckdatenströme mit mindestens einer Datenverarbeitungseinheit mit mindestens einem Speicher und mindestens einer Kommunikationsschnittstelle, **dadurch gekennzeichnet, daß** die Datenverarbeitungseinheit programmtechnisch so eingerichtet ist, daß sie nach dem Verfahren nach einem der Ansprüche 1 bis 15 arbeitet.

18. System zur Transformation digitaler Druckdatenströme nach Anspruch 17, **dadurch gekennzeichnet, daß** die Datenverarbeitungseinheit programmtechnisch so eingerichtet ist, daß sie nach dem Verfahren nach Anspruch 16 arbeitet und das System auch eine Bedienstation mit Anzeigemittel (**8**) und Eingabemittel aufweist, welche es ermöglicht die im Speicher (**6**) der Datenverarbeitungseinheit in einem objektorientierten Format hinterlegten graphisch darstellbaren Objekte (**5**), vorzugsweise auch Script-Objekte (**5a**), vorzugsweise vor ihrer Ausgabe im Ausgangs-Druckdatenstrom (**10**), über das Applikationsinterface (**7**) auszulesen, zu verändern, zu löschen oder hinzuzufügen.

19. System zur Transformation digitaler Druckdatenströme nach Anspruch 17, **dadurch gekennzeichnet, daß** die Datenverarbeitungseinheit programmtechnisch so eingerichtet ist, daß sie nach dem Verfahren nach Anspruch 16, soweit dieser auf Anspruch 15 rückbezogen ist, arbeitet und es überdies erlaubt jeweilig hinterlegte Objekte, vorzugsweise auch Java-Script-Objekte (**5a**) selbst, graphisch auszulesen, zu verändern, zu löschen oder hinzuzufügen, wobei diese graphisch vorgenommenen Manipulationen soweit erforderlich automatisch in Java-Script-Objekte (**5a**) transformiert werden.

20. Drucker, **dadurch gekennzeichnet, daß** er ein System zur Transformation digitaler Druckdatenströme nach Anspruch 17, 18 oder 19 aufweist.

21. Drucker-Server, **dadurch gekennzeichnet, daß** er ein System zur Transformation digitaler Druckdatenströme nach Anspruch 17, 18 oder 19 aufweist.

22. Computerprogramm, das Instruktionen aufweist, die zur Durchführung des Verfahrens nach einem der Ansprüche 1 bis 16 eingerichtet sind.

23. Computerprogrammprodukt, welches ein computerlesbares Medium mit Computerprogramm-Code-Mitteln aufweist, bei dem jeweils nach Laden des Computerprogramms ein Computer durch das Programm zur Durchführung des Verfahrens nach einem der Ansprüche 1 bis 16 veranlaßt wird.

24. Computerprogrammprodukt, welches ein Computerprogramm auf einem elektronischen Trägersignal aufweist, bei dem jeweils nach Laden des Computerprogramms ein Computer durch das Programm zur Durchführung des Verfahrens nach einem der Ansprüche 1 bis 16 veranlaßt wird.

## Claims

1. Method for the transformation of digital print data streams, in which
(i) an input print data stream (2) is read in,
(ii) this is analysed by means of a parser (4) for graphically representable objects (5) and is split up into these graphically representable objects (5), and
(iii)the graphically representable objects (5) are stored in a memory (6) in an object-oriented format, and
(iv) the graphically representable objects (5) stored in the memory (6) in an object-oriented format are transformed into a format for the control of an output device (9), preferably a printer, and
(v) the objects thus transformed are combined into an output print data stream (10) and are output,
**characterized in that** graphically representable objects (5, 5a) are stored in the memory (6) in an object-oriented format, to which at least one stored script is assigned for the purpose of driving the output device, which is executed in the cases defined in the script in order to output the assigned objects.

2. Method according to Claim 1, **characterized in that** the graphically representable objects (5, 5a) are combined into super-objects of higher complexity before being stored in the memory (6).

3. Method according to Claim 1 or 2, **characterized in that**
feedback messages (11) referring to the output print data stream (10) output are read in and are analysed for error messages which indicate that the output device (9), preferably the printer, has recognized a transformed graphic object in the output print data stream (10) which cannot be output by the said printer,
this graphic object is then split up into part objects of lower complexity, and
the part objects thus obtained, in the format for the control of the output device (9), are slipped into the output print data stream (10) which is output to the output device (9).

4. Method according to Claim 1, 2 or 3, **characterized in that** at least one graphically representable object (5) stored in the memory (6) in the object-oriented format is assigned at least one script (5a) which controls external devices, preferably archiving devices, folding systems, enveloping systems or security equipment.

5. Method according to Claim 1, 2, 3 or 4, **characterized in that** at least one graphically representable object (5) stored in the memory (6) in the object-oriented format is assigned at least one script (5a) which automatically receives data, preferably data organized in an object-oriented manner, image data, text data or data from web pages from the Internet, data from XML documents or else e-mails.

6. Method according to Claim 5, **characterized in that** the script (5a) automatically receiving data also requests this data automatically.

7. Method according to one of Claims 1 to 6, **characterized in that** at least one graphically representable object (5) stored in the memory (6) in the object-oriented format is assigned at least one script (5a) which automatically sends data, preferably data organized in an object-oriented manner, image data, text data or data from web pages from the Internet, data from XML documents or else e-mails.

8. Method according to Claim 7, **characterized in that** the script (5a) sends the graphic object (5) associated with itself to a receiver.

9. Method according to Claim 8, to the extent that the latter refers back to Claim 5 or 6, **characterized in that** the script (5a) in turn reassigns the data received by it to the graphic object (5) associated with it, and forwards the graphic object (5) associated with itself to a receiver together with the data requested, received and reassigned by itself.

10. Method according to Claim 5 or 6, **characterized in that** the script (5a) in turn reassigns the data received by it to the graphic object (5) associated with itself, and prints out the graphic object (5) assigned to itself together with the data requested, received and reassigned by itself.

11. Method according to one of Claims 1 to 10, **characterized in that** at least one graphically representable object (5) stored in the memory (6) in the object-oriented format is assigned at least one script (5a) which is executed in the case of the output of the object (5) defined in the script (5a).

12. Method according to one of Claims 1 to 11, **characterized in that** at least one graphically representable object (5) stored in the memory (6) in the object-oriented format is assigned at least one script (5a), at least one case relating to the execution of the script (5a) being defined in the respective script (5a), and occurring automatically, preferably without further influence from outside.

13. Method according to Claim 12, **characterized in that** the automatically occurring case, defined at least in the respective script (5a), relating to the execution of the script (5a) is configured as a timer, that is to say as a case which occurs automatically as a result of expiry of time.

14. Method according to Claim 13, **characterized in that** the timer operates cyclically, that is to say it starts itself again upon expiry.

15. Method according to one of Claims 1 to 14, **characterized in that** Java Script is used as a formal language for the scripts.

16. Method according to one of Claims 1 to 15, **characterized in that** the graphically representable objects (5) stored in the memory (6) in an object-oriented format, preferably also script objects (5a), preferably before they are output in the output print data stream (10), are kept ready by an application interface (7) to be read out, to be changed, to be deleted or to have new objects (5) appended.

17. System for the transformation of digital print data streams comprising at least one data processing unit having at least one memory and at least one communications interface, **characterized in that** the data processing unit is programmed in such a way that it operates in accordance with the method according to one of Claims 1 to 15.

18. System for the transformation of digital print data streams according to Claim 17, **characterized in that** the data processing unit is programmed in such a way that it operates in accordance with the method according to Claim 16, and the system also has an operating station with display means (8) and input means, which makes it possible for the graphically representable objects (5) stored in the memory (6) of the data processing unit in an object-oriented format, preferably also script objects (5a), to be read out via the application interface (7), to be changed, to be deleted or to be appended, preferably before they are output in the output print data stream (10).

19. System for the transformation of digital print data streams according to Claim 17, **characterized in that** the data processing unit is programmed in such a way that it operates in accordance with the method according to Claim 16, to the extent that the latter refers back to Claim 15, and, moreover, permits respectively stored objects, preferably also Java Script objects (5a) themselves, to be read out graphically, to be changed, to be deleted or to be appended, these graphically performed manipulations if necessary being transformed automatically into Java Script objects (5a).

20. Printer, **characterized in that** it has a system for the transformation of digital print data streams according to Claim 17, 18 or 19.

21. Printer server, **characterized in that** it has a system for the transformation of digital print data streams according to Claim 17, 18 or 19.

22. Computer program which comprises instructions aimed at the implementation of the method according to one of Claims 1 to 16.

23. Computer program product which comprises a computer-readable medium with computer program code means, in which, in each case once the computer program has been loaded, a computer is caused by the program to implement the method according to one of Claims 1 to 16.

24. Computer program product which comprises a computer program on an electronic carrier signal, in which, in each case once the computer program has been loaded, a computer is caused by the program to implement the method according to one of Claims 1 to 16.

## Revendications

1. Procédé pour la transformation de flux numériques de données d'impression, avec lequel .
(i) un flux d'entrée de données d'impression (2) est introduit,
(ii) ce flux est analysé au moyen d'un programme d'analyse syntaxique (4) au niveau d'objets (5) pouvant être représentés graphiquement et est décomposé entre ces objets (5) pouvant être représentés graphiquement et
(iii) les objets (5) pouvant être représentés graphiquement sont déposés dans une mémoire (6) dans un format orienté objet, et
(iv) les objets (5) pouvant être représentés graphiquement et déposés dans la mémoire (6) dans un format orienté objet sont transformés en un format pour la commande d'un appareil d'édition (9), de préférence une imprimante, et
(v) les objets ainsi transformés sont regroupés en un flux de sortie de données d'impression (10) et sont édités,
**caractérisé en ce que** des objets (5, 5a) pouvant être représentés graphiquement sont déposés dans la mémoire (6) dans un format orienté objet, auxquels est attribué au moins un script déposé pour la commande de l'appareil d'édition, script qui est réalisé dans des cas définis dans le script pour éditer les objets attribués.

2. Procédé selon la revendication 1, **caractérisé en ce que** les objets (5, 5a) pouvant être représentés graphiquement sont regroupés avant leur dépôt dans la mémoire (6) en sur-objets de complexité supérieure.

3. Procédé selon la revendication 1 ou 2, **caractérisé en ce que**
des messages de retour (11) détaillant le flux de sortie édité de données d'impression (10) sont introduits et analysés au niveau des messages d'erreur, qui indiquent que l'appareil d'édition (9), de préférence l'imprimante, a reconnu un objet graphique transformé dans le flux de sortie de données d'impression (10), qui ne peut pas être édité par elle,
cet objet graphique est ensuite décomposé en objets partiels de complexité inférieure, et
les objets partiels ainsi obtenus sont évacués dans le format pour la commande de l'appareil d'édition (9) dans le flux de sortie de données d'impression (10), qui est sorti pour l'appareil d'édition (9).

4. Procédé selon la revendication 1, 2 ou 3, **caractérisé en ce que**, à au moins un objet (5) pouvant être représenté graphiquement et déposé dans le format orienté objet dans la mémoire (6), il est attribué au moins un script (5a) qui commande des appareils externes, de préférence des dispositifs d'archivage, des systèmes de pliage, des systèmes de mise sous enveloppe ou des dispositifs de sécurité.

5. Procédé selon la revendication 1, 2, 3 ou 4, **caractérisé en ce que**, à au moins un objet (5) pouvant être représenté graphiquement et déposé dans le format orienté objet dans la mémoire (6), il est attribué au moins un script (5a) qui reçoit automatiquement des données, de préférence des données organisées orientées objet, des données d'image, des données de texte ou des données provenant de pages Web d'Internet, des données provenant de documents XML ou également des e-mails.

6. Procédé selon la revendication 5, **caractérisé en ce que** le script (5a) recevant automatiquement des données demande également automatiquement ces données.

7. Procédé selon l'une quelconque des revendications 1 à 6, **caractérisé en ce que**, à au moins un objet (5) pouvant être représenté graphiquement et déposé dans la mémoire (6) dans le format orienté objet, il est attribué au moins un script (5a) qui envoie automatiquement des données, de préférence des données organisées orientées objet, des données d'image, des données de texte ou des données provenant de pages Web d'Internet, des données provenant de documents XML ou également des e-mails.

8. Procédé selon la revendication 7, **caractérisé en ce que** le script (5a) envoie l'objet (5) graphique attribué à lui-même à un destinataire.

9. Procédé selon la revendication 8 dans la mesure où celle-ci fait référence à la revendication 5 ou 6, **caractérisé en ce que** le script (5a) réattribue les données qu'il a reçues à nouveau à l'objet (5) graphique qui lui est attribué et retransmet à un destinataire l'objet (5) graphique qui lui a été attribué avec les données demandées et reçues et qu'il a lui-même réattribuées.

10. Procédé selon la revendication 5 ou 6, **caractérisé en ce que** le script (5a) réattribue les données qu'il a reçues à nouveau à l'objet (5) graphique qui lui a été attribué et édite l'objet (5) graphique qui lui a été attribué avec les données demandées et reçues qui ont été réattribuées à celui-ci par lui-même.

11. Procédé selon l'une quelconque des revendications 1 à 10, **caractérisé en ce que**, à au moins un objet (5) pouvant être représenté graphiquement et déposé dans la mémoire (6) dans le format orienté objet, il est attribué au moins un script (5a), qui est réalisé dans le cas, défini dans le script (5a), de l'édition de l'objet (5).

12. Procédé selon l'une quelconque des revendications 1 à 11, **caractérisé en ce que**, à au moins un objet (5) pouvant être représenté graphiquement et déposé dans la mémoire (6) dans le format orienté objet, il est attribué au moins un script (5a), moyennant quoi on définit dans le script (5a) concerné au moins un cas pour l'exécution du script (5a), qui survient automatiquement, de préférence sans autre influence de l'extérieur.

13. Procédé selon la revendication 12, **caractérisé en ce que** le cas survenant automatiquement et au moins défini dans le script (5a) concerné pour l'exécution du script (5a) est conçu sous la forme d'une minuterie, c'est-à-dire d'un cas survenant automatiquement par déroulement du temps.

14. Procédé selon la revendication 13, **caractérisé en ce que** la minuterie fonctionne de façon cyclique, c'est-à-dire se relance d'elle-même lors du déroulement.

15. Procédé selon l'une quelconque des revendications 1 à 14, **caractérisé en ce qu'**on utilise pour les scripts le script Java comme langage formel.

16. Procédé selon l'une quelconque des revendications 1 à 15, **caractérisé en ce que** les objets (5) pouvant être représentés graphiquement et déposés dans la mémoire (6) dans un format orienté objet, de préférence également des objets de script (Sa), sont mis à disposition de préférence avant leur édition dans le flux de sortie de données d'impression (10), au moyen d'une interface d'application (7), pour la lecture, la modification, la suppression ou l'ajout de nouveaux objets (5).

17. Système pour la transformation de flux numériques de données d'impression équipé d'au moins une unité de traitement de données avec au moins une mémoire et au moins une interface de communication, **caractérisé en ce que** l'unité de traitement de données est équipée au niveau de la technique de programme de telle sorte qu'elle travaille selon le procédé défini selon l'une quelconque des revendications 1 à 15.

18. Système pour la transformation de flux numériques de données d'impression selon la revendication 17, **caractérisé en ce que** l'unité de traitement de données est équipée au niveau de la technique de programme de telle sorte qu'elle travaille selon le procédé défini selon la revendication 16 et le système présente également une station de commande avec des moyens d'affichage (8) et des moyens d'entrée qui permet de lire, modifier, effacer ou ajouter des objets (5) pouvant être représentés graphiquement et déposés dans la mémoire (6) de l'unité de traitement de données dans un format orienté objet, de préférence également des objets de script (5a), de préférence avant leur édition dans le flux de sortie de données d'impression (10) par l'intermédiaire de l'interface d'application (7).

19. Système pour la transformation de flux numériques de données d'impression selon la revendication 17, **caractérisé en ce que** l'unité de traitement de données est équipée au niveau de la technique de programme de telle sorte qu'elle travaille selon le procédé défini selon la revendication 16, si celle-ci fait référence à la revendication 15, et permet également de lire graphiquement, modifier, effacer ou ajouter des objets respectivement déposés, de préférence également des objets de script Java (5a), ces manipulations effectuées graphiquement étant transformées si nécessaire automatiquement en objets de script Java (5a).

20. Imprimante, **caractérisée en ce qu'**elle présente un système pour la transformation de flux numériques de données d'impression selon la revendication 17, 18 ou 19.

21. Serveur d'imprimante, **caractérisé en ce qu'**il présente un système pour la transformation de flux numériques de données d'impression selon la revendication 17, 18 ou 19.

22. Programme informatique qui présente des instructions qui sont aménagées pour l'application du procédé selon l'une quelconque des revendications 1 à 16.

23. Produit de programme informatique, qui présente un support pouvant être lu par ordinateur avec des moyens de codes de programme informatique, avec lequel un ordinateur est amorcé par le programme pour l'application du procédé selon l'une quelconque des revendications 1 à 16, une fois le chargement du programme informatique effectué.

24. Produit de programme informatique, qui présente un programme informatique sur un signal porteur électronique, avec lequel un ordinateur est amorcé par le programme pour l'application du .procédé selon l'une quelconque des revendications 1 à 16, une fois le chargement du programme informatique effectué.
